# EUROPEAN PATENT APPLICATION

(11) **EP 2 860 636 A1**
(43) Date of publication of application: **15.04.2015**
(21) Application number: 12878372.7
(22) Date of filing: 07.06.2012
(51) Int. Cl.: G06F 13/00, G06F 9/54

(54) **BUS CONNECTION PROGRAM AND DEVICE**

(71) Applicant: Kabushiki Kaisha Toshiba, Minato-ku Tokyo 105-8001 (JP); Toshiba Solutions Corporation, Kawasaki-shi, Kanagawa 212-8585 (JP)
(72) Inventor: TERASHITA, Yosuke, Kawasaki-shi Kanagawa 212-8585 (JP); ISHIZAKI, Takashi, Kawasaki-shi Kanagawa 212-8585 (JP); NAKAZATO, Chika, Kawasaki-shi Kanagawa 212-8585 (JP)
(74) Representative: Hoffmann Eitle
(86) International application number: PCT/JP2012/064716
(87) International publication number: WO 2013/183151

(57) **Abstract**

A bus connection apparatus according to an embodiment includes a bus connection unit configured to connect an internal application unit and a common bus. The bus connection unit receives, from an external application unit via the common bus, a request message which designates a service name and a destination. The bus connection unit specifies element names from a file based on the service name in the request message. The bus connection unit processes the request message by calling and executing respective element programs based on the element names. The bus connection unit extracts data from the request message processed by a first processing unit, and sends the data to an internal application unit corresponding to the service name or destination in the request message.

## Description

### Technical Field

Embodiments described herein relate generally to a bus connection program and apparatus.

### Background Art

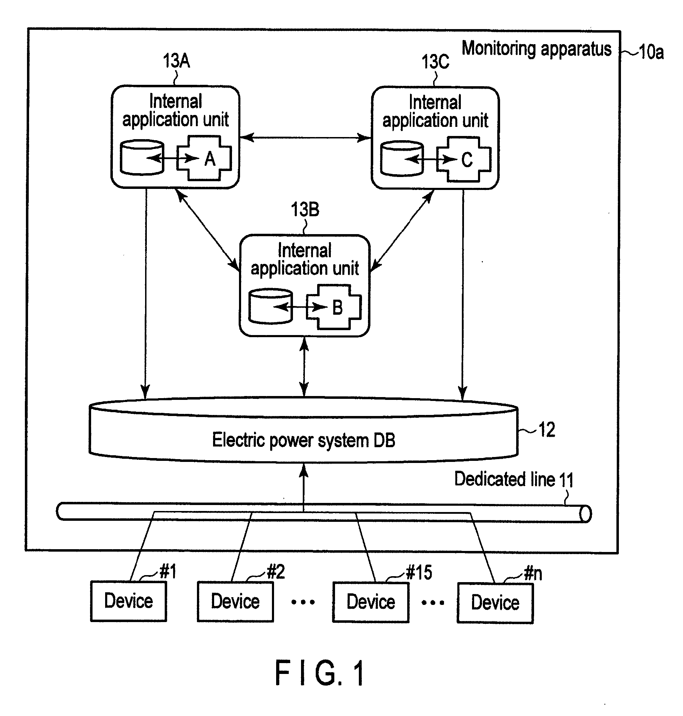

FIG. 1 is a schematic view showing a monitoring apparatus and its peripheral arrangement in a conventional electric power system. In the conventional electric power system, a plurality of devices #1 to #n transmit data to a monitoring apparatus 10a, and the monitoring apparatus 10a saves the data in an electric power system DB 12 via a dedicated bus 11. A processor (not shown) in the monitoring apparatus 10a functions as a plurality of internal application units 13A to 13C by executing a plurality of internal application programs A to C (to be referred to as internal applications A to C hereinafter) in a memory (not shown). The plurality of internal application units 13A to 13C appropriately read out data from the electric power system DB 12, and transmit/receive messages including the data to/from each other.

In this manner, queuing is directly performed mainly between the internal application units 13A to 13C in the conventional electric power system. Thus, messages are transmitted/received according to a method unique to each of the internal application units 13A to 13C. Such a method is called an interconnection method.

Recently, queuing for a plurality of applications and queuing for an external application are becoming indispensable even in an internal application, along with the development of smart communities.

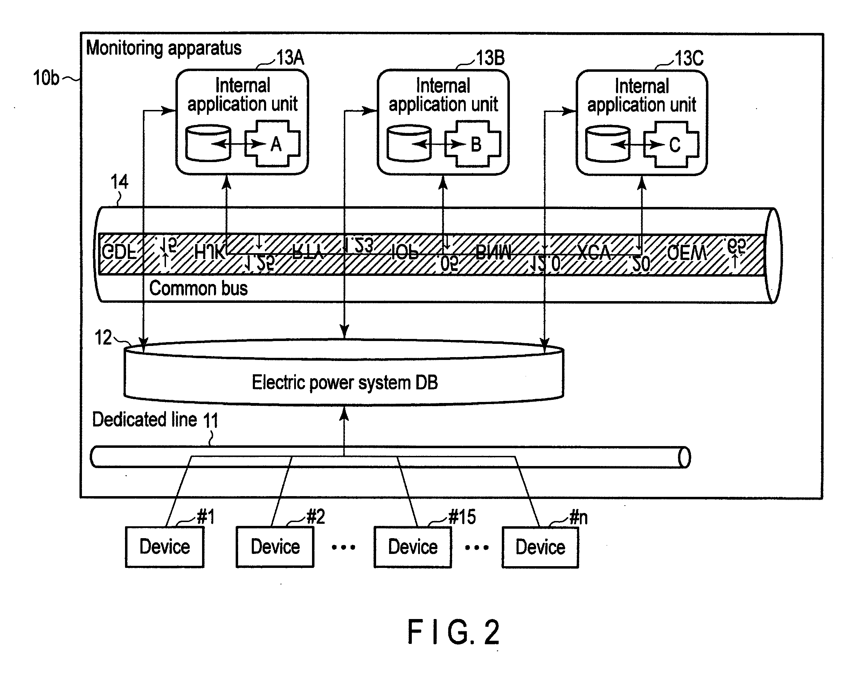

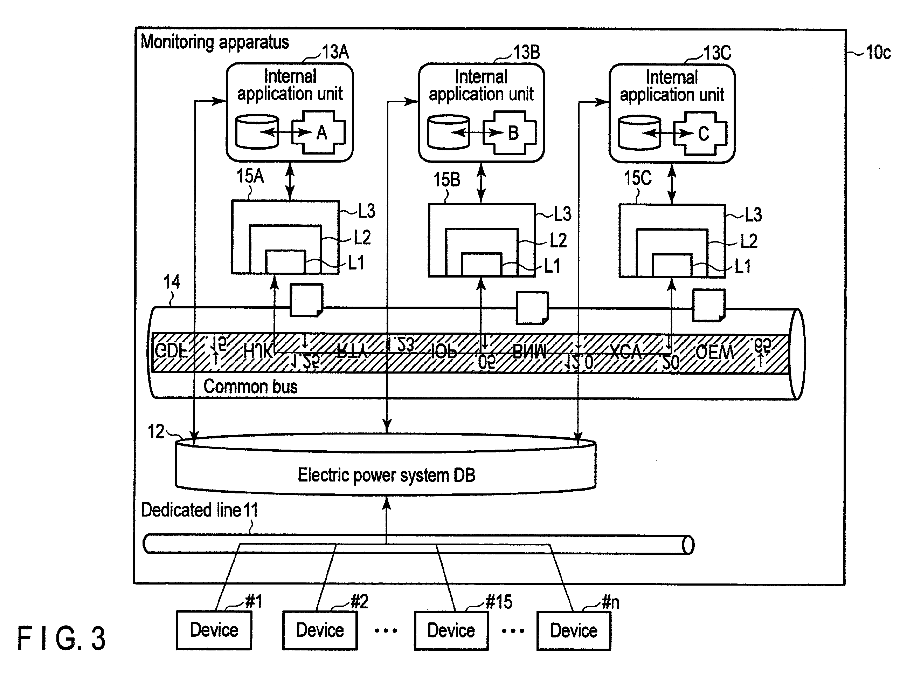

In message queuing between applications, messages are transmitted/received via a common bus 14 in a monitoring apparatus 10b, as shown in FIG. 2. In queuing using the common bus 14, messages are transmitted/received via a plurality of bus connection adapters 15A to 15C in a monitoring apparatus 10c, as shown in FIG. 3. Such a method is called a common bus method.

Each of the bus connection adapters 15A to 15C includes a messaging layer L1, connecting layer L2, and adapter layer L3. The messaging layer L1 has a message transmission/reception function. The connecting layer L2 has a function for connecting to the common bus 14. The adapter layer L3 has a message processing function and a queuing function for an existing system.

In queuing for an external application, the bus connection adapters 15A to 15C require a security function, standardization function, and individual request support function in the adapter layer L3. The security function is a function for implementing security measures such as encryption and user authentication. The standardization function is a function corresponding to an industry standard (CIM (Common Information Model): IEC (International Electrotechnical Commission)) regarding data transmission/reception. In an electric power system, this function is directed to the substation automation system IEC61850, distribution management system IEC61970/IEC61968, and the like (when one of these standards is referred to, it will be called IEC hereinafter). The individual request support function is a function for executing compression, decompression, serialization, mapping, filtering, protocol conversion, and special message processing such as information addition of acquiring device information from an external storage device and adding the information to a message. The contents of each function change for each country, region, and case, or for each use form.

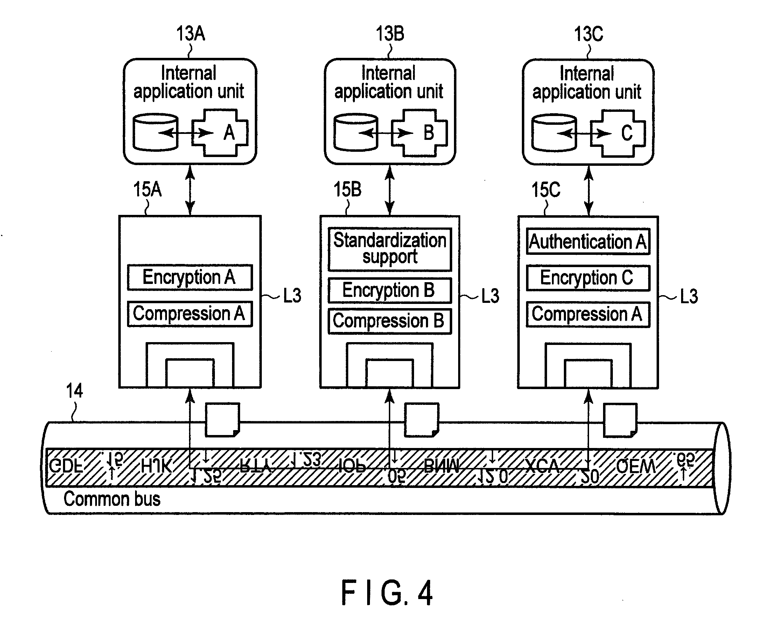

As shown in FIG. 4, the bus connection adapters 15A to 15C incorporate, in the adapter layer, the security function (encryption A to C, authentication A), the standardization function (standardization support), and the individual request support function (compression A, B) unique to each country, region, and case.

### Citation List

### Patent Literature

Patent Literature 1: Jpn. Pat. Appln. KOKAI Publication No. 2009-213238

### Summary of Invention

### Technical Problem

However, if functions unique to each country, region, and case are incorporated in the bus connection adapter, this increases and diversifies programs of the bus connection adapter, and makes management difficult. Since the contents of each function may be changed later, it is difficult to create a program for a general-purpose bus connection adapter. Further, every time each function is changed, a program for a unique bus connection adapter needs to be created, thus demands such as for systems to be constructed quickly or functions to be changed cannot be met.

A solution to such problem of the present invention is to provide a bus connection program and an apparatus which can be easily managed, is versatile, and need not be created every time a function is changed.

A bus connection program according to the embodiment is stored in a non-transitory computer-readable storage medium and is used for a monitoring apparatus including a data storage unit, internal application unit, and common bus.

The monitoring apparatus executes the bus connection program.

The data storage unit stores data received from a plurality of devices.

The internal application unit can transmit/receive a message including the data in the data storage unit.

The common bus can transmit the message between the internal application unit and an external application unit.

The monitoring apparatus further includes a file storage unit and an element storage unit.

The file storage unit stores a file which describes, in association with each other, a service name for identifying the internal application unit, and element names for identifying element programs used to execute respective processes on the message.

The element storage unit stores a plurality of element programs which are individually called and executed in accordance with designation of the element names.

The plurality of element programs are a plurality of programs for processing a message to be transmitted/received via the common bus. The plurality of element programs include a standardization function element program, individual request support function element program, and security function support element program.

The standardization function element program is a program for processing the message based on an individual request.

The individual request support function element program is a program for processing the message based on an individual request.

The security function support element program is a program for processing the message based on security support.

The bus connection program is a program for causing the monitoring apparatus to further function as a bus connection unit configured to connect the internal application unit and the common bus.

The bus connection unit includes a first reception unit, a first specifying unit, a first processing unit, a sending unit, a second reception unit, a second specifying unit, a second processing unit, and a transmission unit.

The first reception unit receives, from the external application unit via the common bus, a request message which designates the service name and a destination.

The first specifying unit specifies element names from the file based on the service name in the received request message.

The first processing unit processes the request message by calling and executing the respective element programs based on the specified element names.

The sending means extracts data from the request message processed by the first processing unit, and sends the data to an internal application unit corresponding to the service name or destination designated by the request message.

The second reception unit receives, from the internal application unit, a transmission message which designates the service name and a destination.

The second specifying unit specifies element names from the file based on the service name in the received transmission message.

The second processing unit processes the transmission message by calling and executing the respective element programs based on the element names specified by the second specifying unit.

The transmission unit transmits the transmission message processed by the second processing unit to the external application unit corresponding to the service name or destination designated by the transmission message.

### Brief Description of Drawings

FIG. 1 is a schematic view showing a monitoring apparatus and its peripheral arrangement in a conventional electric power system.
FIG. 2 is a schematic view for explaining a conventional common bus method.
FIG. 3 is a schematic view for explaining a conventional common bus method.
FIG. 4 is a schematic view for explaining a conventional bus connection adapter.
FIG. 5 is a schematic view for explaining a bus connection cartridge adapter common to respective embodiments.
FIG. 6 is a schematic view for explaining the bus connection cartridge adapter common to the respective embodiments.
FIG. 7 is a schematic view for explaining the bus connection cartridge adapter common to the respective embodiments.
FIG. 8 is a schematic view for explaining the application of each general pattern.
FIG. 9 is a schematic view for explaining an outline of a bus connection cartridge adapter and file according to one embodiment.
FIG. 10 is a schematic view showing a monitoring apparatus to which a bus connection program according to the first embodiment is applied, and the peripheral arrangement of the monitoring apparatus.
FIG. 11 is a schematic view for explaining an element program in the embodiment.
FIG. 12 is a schematic view for explaining an element program in the embodiment.
FIG. 13 is a schematic view showing the transmission/reception pattern of a message in the embodiment.
FIG. 14 is a flowchart for explaining an operation in the embodiment.
FIG. 15 is a table showing an example of data in the embodiment.
FIG. 16 is a table showing an example of data in the embodiment.
FIG. 17 is a table showing an example of data in the embodiment.
FIG. 18 is a table showing an example of data in the embodiment.
FIG. 19 is a flowchart for explaining an operation in the embodiment.
FIG. 20 is a table showing an example of data in the embodiment.
FIG. 21 is a schematic view for explaining a bus connection cartridge adapter according to the second embodiment.
FIG. 22 is a schematic view for explaining a bus connection cartridge adapter according to the third embodiment.
FIG. 23 is a schematic view showing the arrangement of a file storage unit in the embodiment.
FIG. 24 is a schematic view for explaining a bus connection cartridge adapter according to the fourth embodiment.
FIG. 25 is a schematic view showing an outline of a message in the embodiment.
FIG. 26 is a schematic view showing a monitoring apparatus to which a bus connection program in the embodiment is applied, and the peripheral arrangement of the monitoring apparatus.
FIG. 27 is a schematic view showing a modification of the embodiment.
FIG. 28 is a schematic view for explaining a bus connection cartridge adapter according to the fifth embodiment.
FIG. 29 is a schematic view showing a monitoring apparatus to which a bus connection program in the embodiment is applied, and the peripheral arrangement of the monitoring apparatus.

### Description of Embodiments

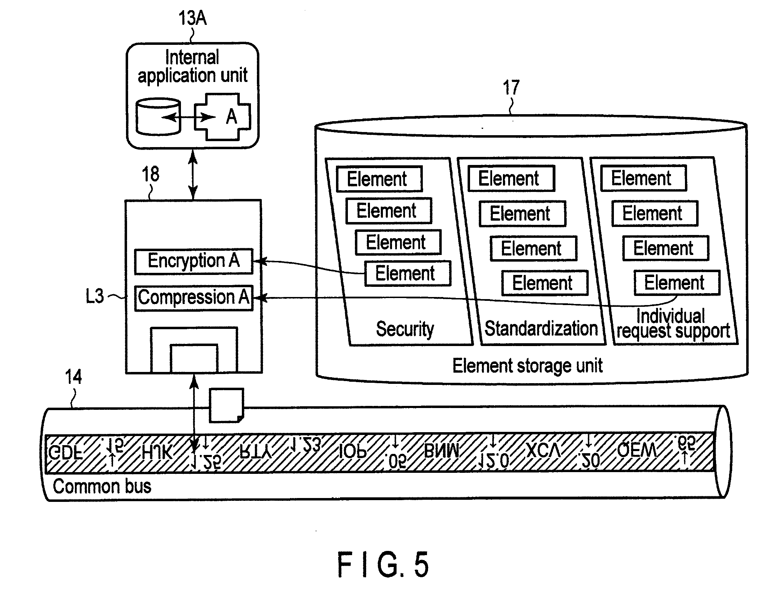

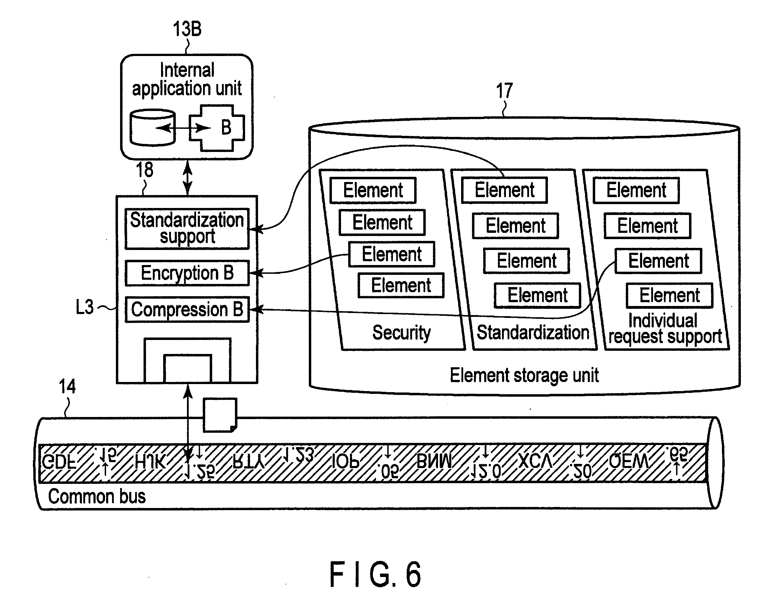

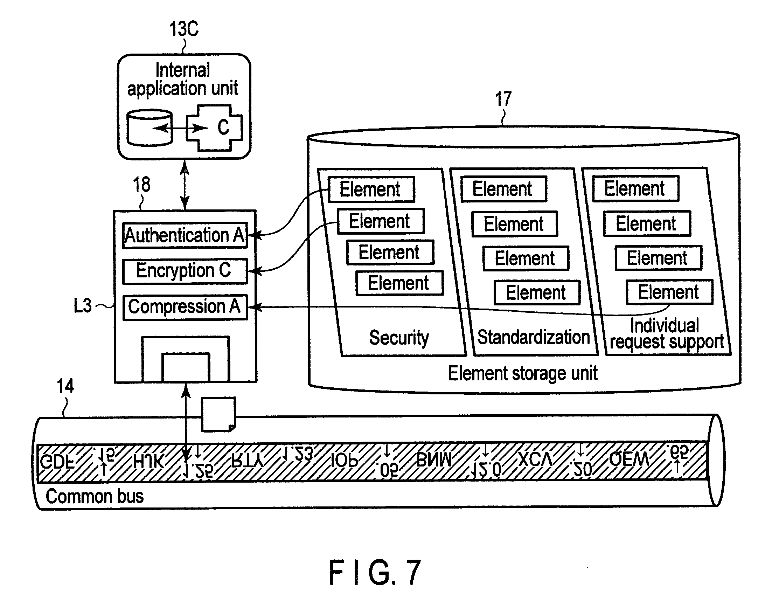

Embodiments will now be described with reference to the accompanying drawings. Before the description of the embodiments, an outline common to the respective embodiments will be explained with reference to FIGS. 5, 6, 7, and 8.

FIGS. 5, 6, and 7 are schematic views for explaining a bus connection cartridge adapter common to the respective embodiments. In this specification, a method of calling an element from an adapter will be called the cartridge method. An adapter using the cartridge method will be called a bus connection cartridge adapter. However, the terms "cartridge method" and "bus connection cartridge adapter" may be appropriately changed to other terms. For example, the term "bus connection cartridge adapter" may be changed to an arbitrary term such as "bus connection adapter", "electric power system cartridge adapter", or "electric power system adapter".

A bus connection cartridge adapter 18 makes it possible to use a plurality of functions by calling various elements (components) from an element storage unit 17 by an adapter layer L3. This obviates the need to create in advance a bus connection program to be used in the bus connection cartridge adapter 18 for each application. Note that the element storage unit 17 is a memory readable from the bus connection cartridge adapter 18, and stores each element file prepared in advance. Each element file prepared in advance may also be called a pre-element library.

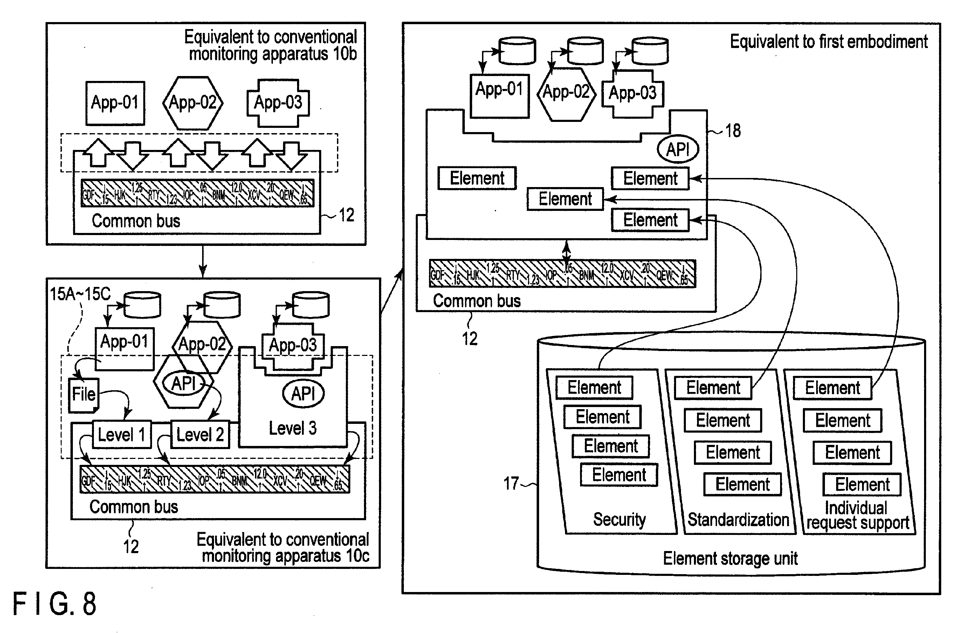

As described above, a conventional electric power system performs message queuing between applications by using a common bus 12, as shown on the left side of FIG. 8.

Applications are roughly classified into three patterns (App-01) to (App-03):
(App-01) An application of the first pattern is a traditional application and is used for data management having know-how.
(App-02) An application of the second pattern is an application developed in an open environment, and an external interface has been built.
(App-03) An application of the third pattern is an application which will be developed in the future, and is a value-added next-generation application.

The bus connection cartridge adapter 18 transfers messages at the following three levels (Level 1) to (Level 3) in accordance with the applications (App-01) to (App-03) of the respective patterns:
(Level 1) Transfer by a file
(Level 2) Transfer of a message by external application calling
(Level 3) Transfer of a message by API (Application Program Interface) calling

The element storage unit 17 needs to execute the security function, standardization function, and individual request support function in accordance with a message.

Hence, the bus connection cartridge adapter 18 is configured to call the elements (component programs) of each function, as shown on the right side of FIG. 8. Since the bus connection cartridge adapter 18 can execute each function in correspondence with a message, quick system construction, function change, and the like become possible. By preparing the elements of each function, elements can be selected according to the case. Each element is used, such as, e.g., DLL (Dynamic Link Library), and is implemented as a library which can be called by the bus connection cartridge adapter 18.

Accordingly, the following effects (i) to (iv) can be obtained:
(i) The bus connection cartridge adapter 18 common to respective messages can be used. When a function is added or changed, the main body of the bus connection cartridge adapter 18 need not be changed. When various requirements such as a security requirement are changed, the change can be coped with merely by modifying elements.
(ii) The elements of each function can be called singly or successively. The elements of each function can also be called in order.
(iii) Since respective elements in the element storage unit 17 and the bus connection cartridge adapter 18 can be separated, management becomes easy.

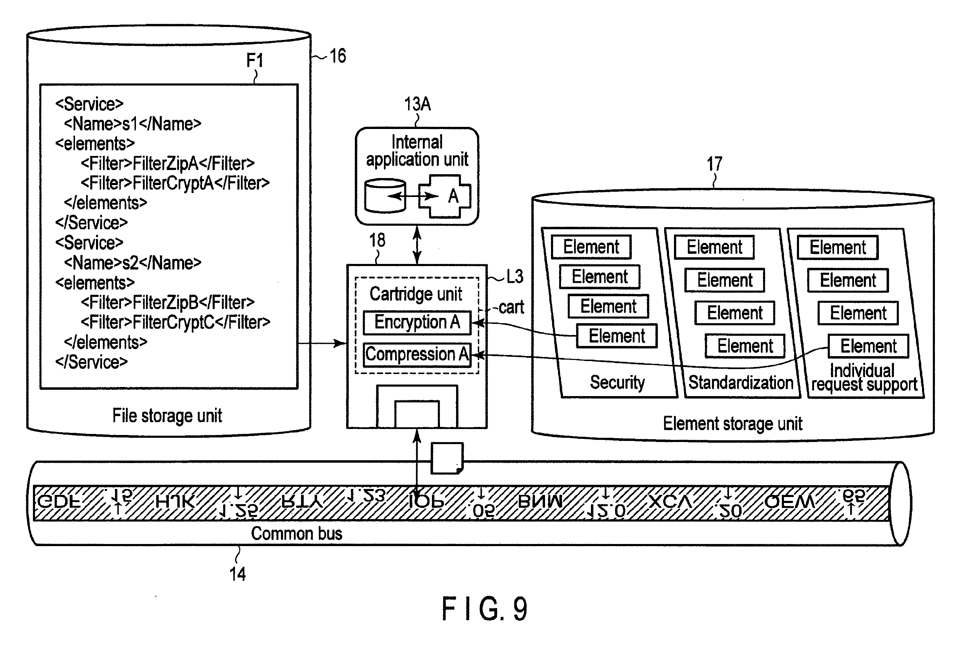

In addition to these effects, a cartridge unit cart in the bus connection cartridge adapter 18 may call elements by referring to a file F1 of the XML (Extensible Markup Language) format read out from a file storage unit 16, as shown in FIG. 9. Assume that the file F1 describes element names necessary for each application, and an element calling order. Note that the file F1 is not limited to the XML format.

The configuration shown in FIG. 9 can further obtain the following effect (iv):
(iv) Message format processing and management become easy for each application. When a request message is externally received, elements to be called, and a calling order can be changed depending on the contents of the request message.

An outline common to the respective embodiments has been given. Next, the embodiments will be explained sequentially from the first embodiment.

### <First Embodiment>

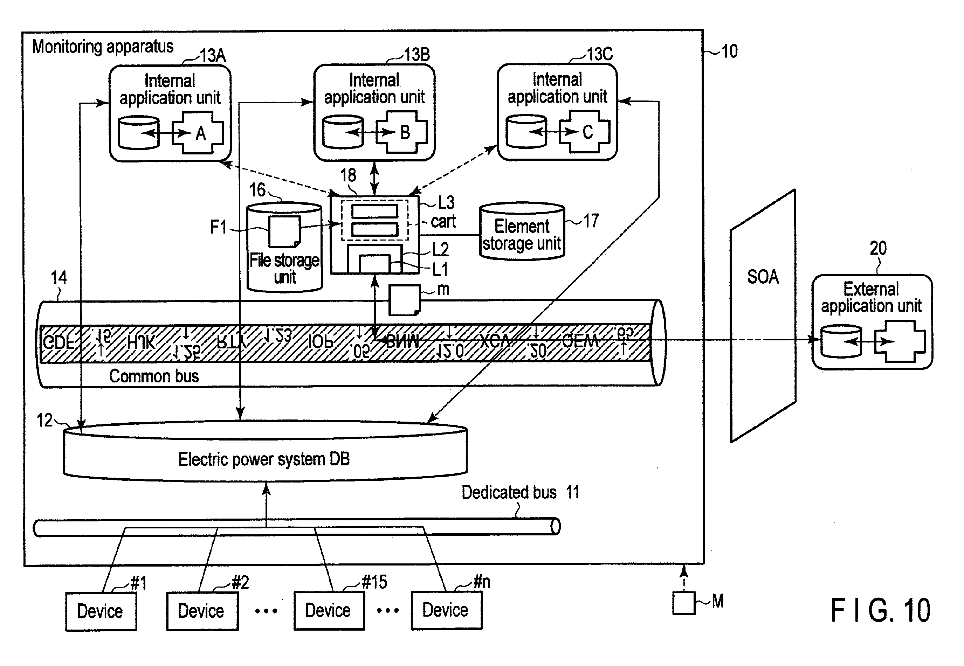

FIG. 10 is a schematic view showing a monitoring apparatus to which a bus connection program according to the first embodiment is applied, and the peripheral arrangement of the monitoring apparatus. The same reference numerals as those shown in FIG. 3 denote the same parts, a detailed description thereof will not be repeated, and different parts will be mainly described below. Even in the following embodiments, a repetitive description will be omitted. Although three internal application units, 13A to 13C, are shown in FIG. 10, each embodiment will exemplify transmission/reception between one internal application unit 13B and an external application unit 20, without exemplifying transmission/reception between the internal application units 13A to 13C. The same part as the arrangement shown in FIG. 3 is an arrangement including an electric power system DB (data storage unit) 12, the internal application unit 13B, and a common bus 14 in a monitoring apparatus 10. The electric power system DB 12 stores data received from a plurality of devices #1 to #n. The internal application unit 13B transmits/receives messages including data in the electric power system DB 12. The common bus 14 is a bus capable of transmitting messages between the internal application unit 13B and the common bus 14.

More specifically, the first embodiment further includes a file storage unit 16, element storage unit 17, and bus connection cartridge adapter 18, instead of the bus connection adapters 15A to 15C, unlike the arrangement shown in FIG. 3.

The file storage unit 16 stores a file F1 which describes a service name and element names in association with each other. The service name is information for identifying the internal application units 13A to 13C. The element name is information for identifying an element program used to execute each process on a message. The file F1 may describe a service name, element names for identifying element programs, and the calling order of the element programs. The file F1 may be described in the XML format, as shown in FIG. 9.

The element storage unit 17 stores a plurality of element programs which are individually called and executed in accordance with designation of element names. The plurality of element programs are a plurality of programs for processing messages to be transmitted/received via the common bus 14. These programs include, for example, a standardization function element program, individual request support function element program, and security function support element program. The standardization function element program is a program for processing a message based on a standard. The individual request support function element program is a program for processing a message based on an individual request. The security function support element program is a program for processing a message based on security support. The standardization function element program, individual request support function element program, and security function support element program may also be called a standardization function element program group, individual request support function element program group, and security function support element program group.

These element programs include, for example, the first to sixth element programs.

The first element program is a program for executing processing of decompressing a request message received from the external application unit 20 via the common bus 14.

The second element program is a program for executing processing of decrypting the decompressed request message.

The third element program is a program for executing processing of decoding, based on an IEC standard, the request message having undergone the decryption or decompression processing.

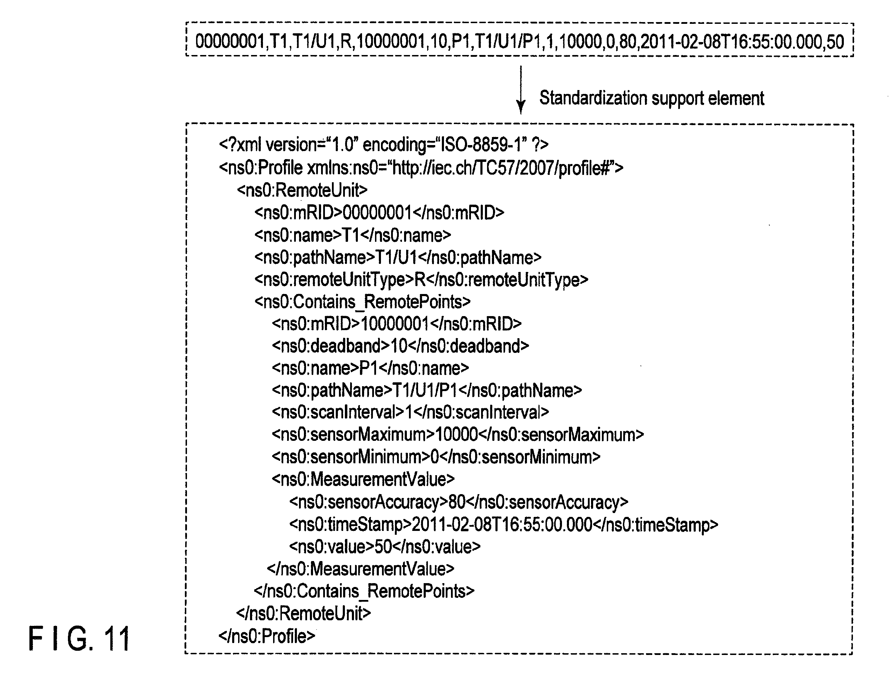

The fourth element program is a program for executing processing of standardizing, based on an IEC standard, transmission messages received from the internal application units 13A to 13C (see, e.g., FIG. 11).

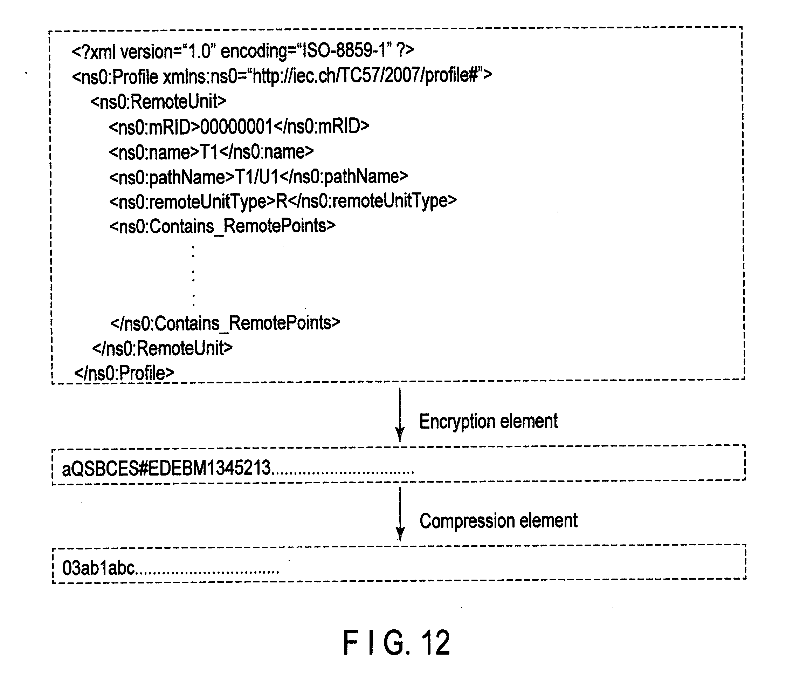

The fifth element program is a program for executing processing of encrypting transmission messages received from the internal application units 13A to 13C, or standardized transmission messages (see, e.g., FIG. 12).

The sixth element program is a program for executing processing of compressing an encrypted transmission message (see, e.g., FIG. 12).

The first element program (decompression processing) and the sixth element program (compression processing) correspond to the above-mentioned individual request support function. The second element program (decryption processing) and the fifth element program (encryption processing) correspond to the above-mentioned security function. The third element program (IEC-based decoding processing) and the fourth element program (IEC-based standardization processing) correspond to the above-mentioned standardization function. Note that the element programs corresponding to the individual request support function are not limited to decompression processing and compression processing, and may perform, for example, serialization processing, mapping processing, filtering processing, protocol conversion processing, and information addition processing of acquiring device information from an external storage device and adding the information to a message.

The bus connection cartridge adapter (bus connection unit) 18 is a functional unit implemented by executing a bus connection program in a memory (not shown) by a processor (not shown) in the monitoring apparatus 10. In other words, the bus connection cartridge adapter 18 can be implemented by a combined configuration of a hardware resource and software. As this software, a bus connection program is used, which is installed in advance in the computer of the monitoring apparatus 10 from a network or a non-transitory computer-readable storage medium M, and causes the computer to implement the function of the bus connection cartridge adapter 18, as shown in FIGS. 10, 26, and 29. However, the bus connection cartridge adapter 18 is not limited to the combined configuration of the hardware resource and software, and can also be implemented as a bus connection apparatus having a hardware configuration.

The bus connection cartridge adapter 18 has, for example, the following functions (f18-1) to (f18-8):
(f18-1) A first reception function of receiving, from the external application unit 20 via the common bus 14, a request message which designates a service name and destination.
(f18-2) A first specifying function of specifying element names from the file F1 based on the service name in the received request message.
(f18-3) A first processing function of processing the request message by calling and executing respective element programs based on the specified element names.
(f18-4) A sending function of extracting data from the request message processed by the first processing function (f18-3), and sending the data to the internal application unit 13B corresponding to the service name or destination designated by the request message.
(f18-5) A second reception function of receiving, from the internal application unit 13B, a transmission message which designates a service name and destination.
(f18-6) A second specifying function of specifying element names from the file F1 based on the service name in the received transmission message.
(f18-7) A second processing function of processing the transmission message by calling and executing respective element programs based on the element names specified by the second specifying function (f18-6).
(f18-8) A transmission function of transmitting the transmission message processed by the second processing function (f18-7) to the external application unit 20 corresponding to the service name or destination designated by the transmission message.

Note that the first specifying function (f18-2) and the second specifying function (f18-6) may specify element names and a calling order from the file F1 based on a service name.

The first processing function (f18-3) and the second processing function (f18-7) may process a request message by successively calling and executing respective element programs based on specified element names and a calling order.

The bus connection cartridge adapter 18 may be configured to include a messaging layer L1, connecting layer L2, and adapter layer L3, as described above. The messaging layer L1 has the message transmission/reception functions (f18-1), (f18-4), (f18-5), and (f18-8). The connecting layer L2 has a function of connecting to the common bus 14. The adapter layer L3 has a message processing function and a queuing function for an existing system. Also, the adapter layer L3 has a cartridge unit cart which calls and executes element programs for implementing the functions (f18-2), (f18-3), (f18-6), and (f18-7) of the message processing function and the queuing function for an existing system.

The bus connection cartridge adapter 18 may further have the following functions (f18-9) to (f18-12) so as to modify an element program or the file F1 in accordance with, e.g., an operation by the administrator:
(f18-9) A first acceptance function of accepting input of data, and a modification instruction designating an element name.
(f18-10) A first modification function of modifying an element program identified by the designated element name based on the data and modification instruction, input of which has been accepted by the first acceptance function (f18-9).
(f18-11) A second acceptance function of accepting input of a file name for identifying a file, a modification instruction designating an element name, and a modification element name.
(f18-12) A second modification function of modifying, to the modification element name, the element name in the file F1 designated by the file name and modification instruction, based on the file name, modification instruction, and modification element name, input of which has been accepted by the second acceptance function (f18-11).

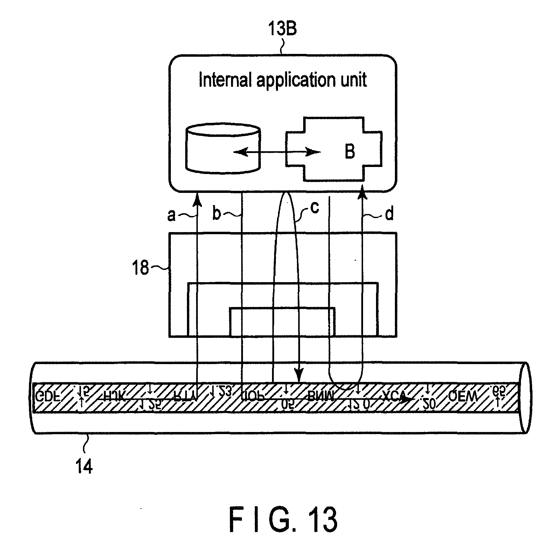

Next, the operation of the monitoring apparatus including the bus connection cartridge adapter 18 having the above-described arrangement will be explained with reference to FIGS. 13, 14, 15, 16, 17, 18, and 19. In the following description, queuing between the internal application unit 13B and the external application unit 20 will be exemplified. However, the embodiment is not limited to this, and queuing between the internal application unit 13B and the remaining internal application units 13A and 13C is also possible.

Patterns of queuing (transmission/reception of a message) for the external application unit 20 are the following four operations [a] to [d], as shown in FIG. 13:
[a] Reception of a message from the external application unit 20
[b] Transmission of a message to the external application unit 20
[c] Reception/reply (request/reply type) of a message from the external application unit 20
[d] Transmission/reception (request/reply type) to/from the external application unit 20

These operations will be explained in order.

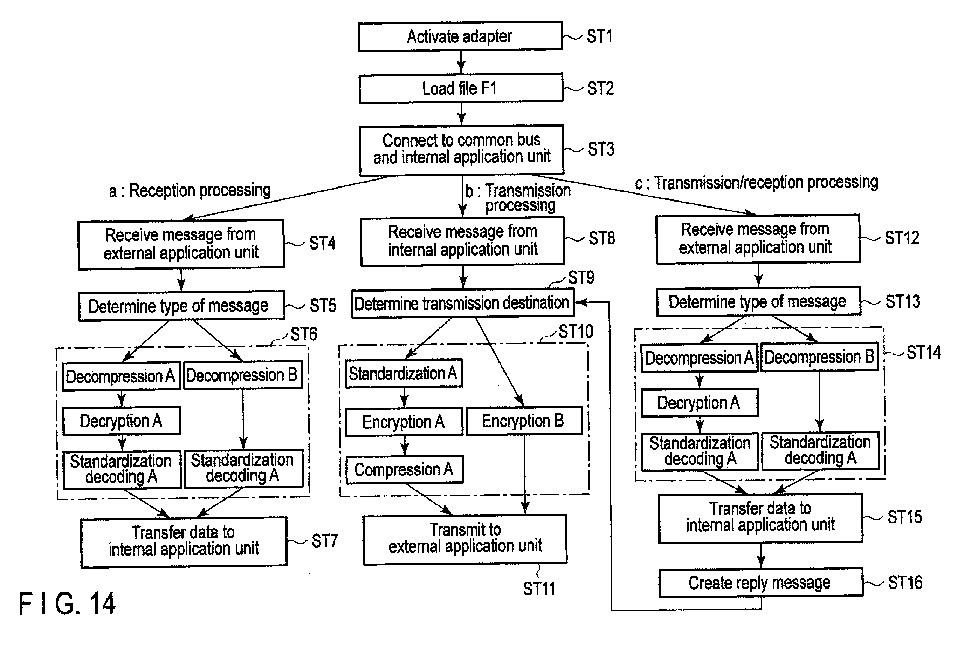

First, steps ST1 to ST3 common to four operations [a] to [d] will be described with reference to FIG. 14.

When the processor (not shown) starts execution of the bus connection program, the monitoring apparatus 10 activates the bus connection cartridge adapter 18 (ST1).

As initialization processing, the bus connection cartridge adapter 18 loads the file F1 of the XML format (ST2).

Also, as initialization processing, the bus connection cartridge adapter 18 performs connection processing to the common bus 14 and internal application unit 13B (ST3).

Subsequently, steps ST4 to ST7 regarding message reception processing operation [a] will be described. Operation [a] assumes the following example 1 or 2:
Example 1: A case in which a message is periodically received from the external application unit 20 and saved in the internal application unit 13B.
Example 2: A case in which messages including data such as an energy use amount and energy generation amount are acquired from monitoring target devices #1 and #2 at a predetermined cycle, and the data extracted from the messages are saved in an internal database (e.g., the electric power system DB 12). In this case, the data is confidential information and requires a security measure.

Assume that the bus connection cartridge adapter 18 has received a message from the external application unit 20 via the common bus 14 after step ST3 (ST4). Assume that the received message is a request message in which a service name and destination are designated in properties within the header part.

The bus connection cartridge adapter 18 determines the type of received message (ST5). More specifically, the bus connection cartridge adapter 18 specifies element names and a calling order from the file F1 based on a service name (or destination) in the received request message.

In the bus connection cartridge adapter 18, the cartridge unit cart processes the request message by calling and executing respective element programs based on the specified element names and calling order (ST6).

In step ST6, for example, when the request message has undergone standardization processing, encryption processing, and compression processing, the cartridge unit cart sequentially calls and executes the respective element programs of decompression processing A, decryption processing (encryption decoding processing) A, and standardization decoding processing A. For example, when the request message has undergone standardization processing and compression processing, the cartridge unit cart sequentially calls and executes the respective element programs of decompression processing B and standardization decoding processing A.

After step ST6, the bus connection cartridge adapter 18 extracts data from the request message processed in step ST6, and sends the data to the internal application unit 13B corresponding to the service name or destination designated by the request message (ST7).

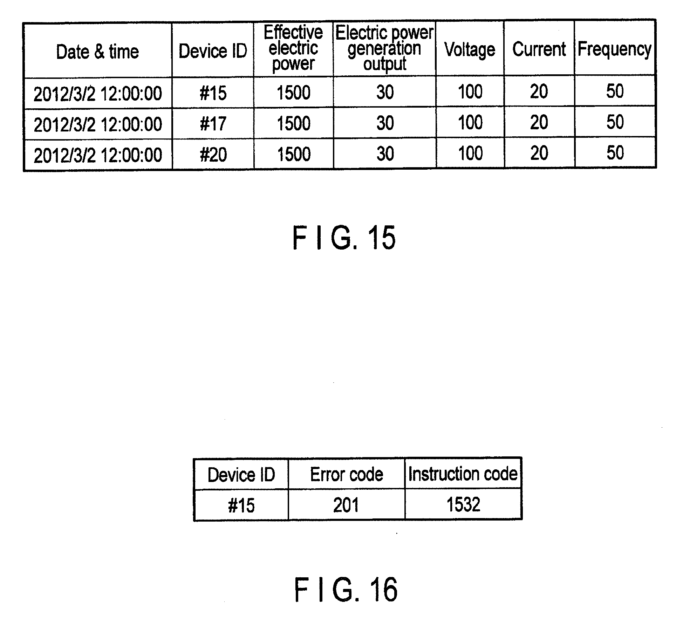

The internal application unit 13B writes the sent data. The data are, for example, data (e.g., the values of a device ID, effective electric power, electric power generation output, voltage, and frequency) of each device at a specific date and time, as shown in FIG. 15.

Next, steps ST8 to ST11 regarding message transmission processing operation [b] will be described. Operation [b] assumes the following example 3 or 4:
Example 3: A case in which a message and instruction are transmitted to the external application unit 20.
Example 4: A case in which the abnormalities of monitoring target devices #1 to #n are detected, and an error message representing the abnormalities, and a measure instruction are transmitted. If the error contents include confidential information, a security measure is necessary.

Assume that the bus connection cartridge adapter 18 has received, from the internal application unit 13B after step ST3, a transmission message in which a service name and destination are designated in properties within the header part (ST8). Assume that this message is a transmission message to the external application unit 20. This message includes, for example, data having a device ID representing a device in which an abnormality has been detected, an error code equivalent to an error message, and an instruction code equivalent to a measure instruction, as shown in FIG. 16.

The bus connection cartridge adapter 18 decodes the received transmission message, and determines a transmission destination (ST9). Also, the bus connection cartridge adapter 18 specifies element names and a calling order from the file F1 based on a service name (or destination) in the received transmission message.

In the bus connection cartridge adapter 18, the cartridge unit cart processes the transmission message by calling and executing respective element programs based on the specified element names and calling order (ST10).

In step ST10, for example, when performing standardization processing, encryption processing, and compression processing on the transmission message, the cartridge unit cart sequentially calls and executes the respective element programs of standardization processing A, encryption processing A, and compression processing A. For example, when performing encryption processing on the transmission message, the cartridge unit cart calls and executes the element program of encryption processing A. This encryption processing uses, for example, the public key of the external application unit 20 serving as a transmission destination or another internal application unit. A case in which no standardization processing is performed on the message is generally queuing for an internal application unit.

After step ST10, the bus connection cartridge adapter 18 transmits the transmission message processed in step ST10 to the external application unit 20 corresponding to the service name or destination designated by the transmission message (ST11).

Next, steps ST12 to ST16 regarding message reception/transmission processing operation [c] will be described. Operation [c] assumes the following example 5 or 6:
Example 5: A case in which data necessary for a request from the external application unit 20 is sent back.
Example 6: A case in which the external application unit 20 requests data such as an electric power supply/demand plan, and the resultant data is sent back to the requesting source. At the time of reply, standardization processing, encryption processing, and the like are executed on a transmission message for queuing for the external application unit 20.

Assume that the bus connection cartridge adapter 18 has received a message from the external application unit 20 via the common bus 14 after step ST3 (ST12).

The bus connection cartridge adapter 18 determines the type of received message (ST13). More specifically, the bus connection cartridge adapter 18 specifies element names and a calling order from the file F1 based on a service name (or destination) in the received request message.

In the bus connection cartridge adapter 18, the cartridge unit cart processes the request message by calling and executing respective element programs based on the specified element names and calling order (ST14).

In step ST14, as in step ST6, the cartridge unit cart sequentially calls and executes the respective element programs.

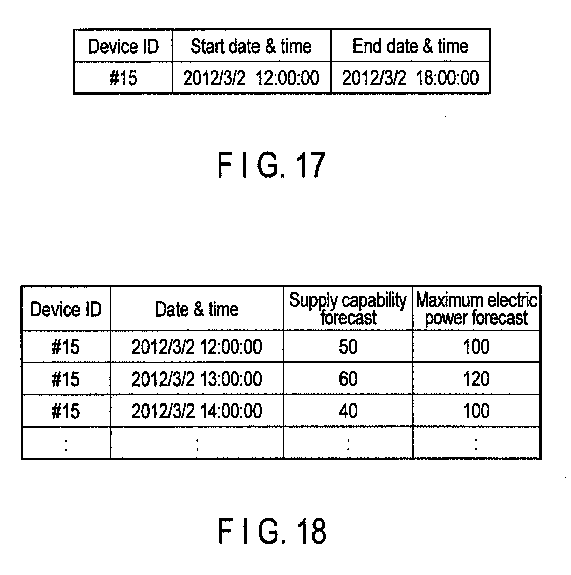

After step ST14, the bus connection cartridge adapter 18 extracts data from the request message processed in step ST14, and sends the data to the internal application unit 13B corresponding to the service name or destination designated by the request message (ST15). This data includes, for example, a device ID for designating data to be requested, a start date and time, and an end date and time, as shown in FIG. 17.

Then, the bus connection cartridge adapter 18 receives the processing result data from the internal application unit 13B, and creates a reply message including the data (ST16). This data includes, for example, a designated device ID, and data of every hour between the start date and time and the end date and time (e.g., the values of a device ID, date and time, supply capability forecast, and maximum electric power forecast), as shown in FIG. 18. The supply capability is a capability of generating electric power. The maximum electric power is the maximum value of electric power to be used by a device. The bus connection cartridge adapter 18 designates a service name and destination in properties within the header part of the reply message.

Thereafter, as in steps ST9 to ST11, the bus connection cartridge adapter 18 transmits the reply message to the external application unit 20.

Next, steps ST20 to ST27 regarding message transmission/reception processing operation [d] will be described. Operation [d] assumes the following example 7 or 8:
Example 7: A case in which a request is issued to the external application unit 20 to acquire necessary data.
Example 8: A case in which information (e.g., effective electric power, electric power generation output, voltage, current, and frequency) of a device for a predetermined period is acquired from the external application unit 20. Since data is acquired from the external application unit 20, standardization processing is necessary.

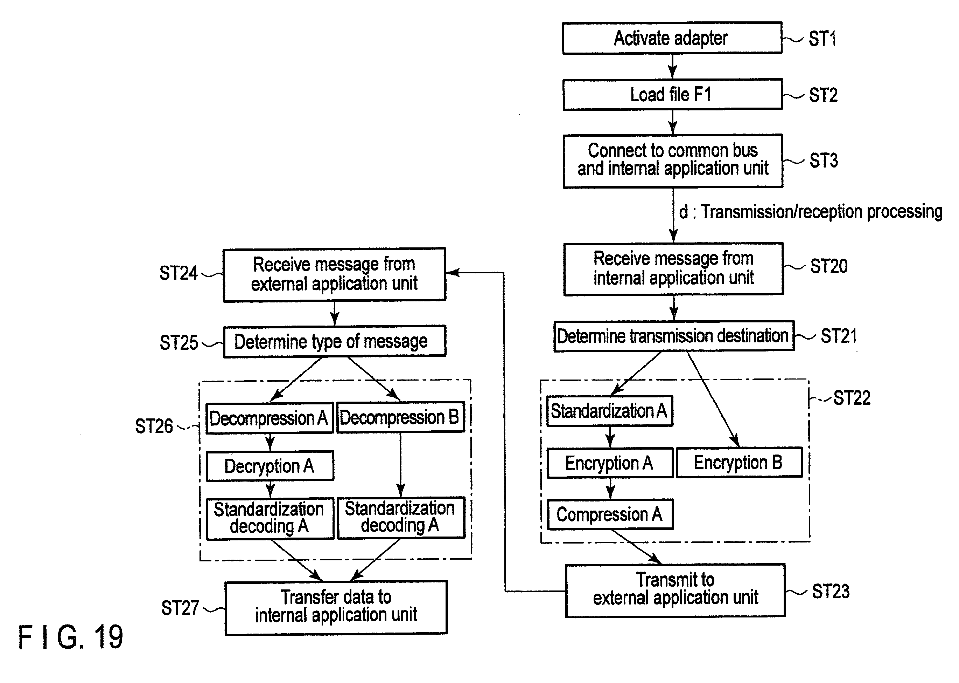

Assume that the bus connection cartridge adapter 18 has received, from the internal application unit 13B after step ST3, a transmission message in which a service name and destination are designated in properties within the header part, as shown in FIG. 19 (ST20). This message includes, for example, data having a device ID representing a data acquisition target device, and a start date and time and an end date and time representing a predetermined period, as shown in FIG. 17.

The bus connection cartridge adapter 18 decodes the received message, and determines a transmission destination (ST21). Also, the bus connection cartridge adapter 18 specifies element names and a calling order from the file F1 based on a service name (or destination) in the received transmission message.

In the bus connection cartridge adapter 18, the cartridge unit cart processes the transmission message by calling and executing respective element programs based on the specified element names and calling order (ST22). In step ST22, as in step ST10, the cartridge unit cart sequentially calls and executes the respective element programs.

After step ST22, the bus connection cartridge adapter 18 transmits the transmission message processed in step ST22 to the external application unit 20 corresponding to the service name or destination designated by the transmission message (ST23).

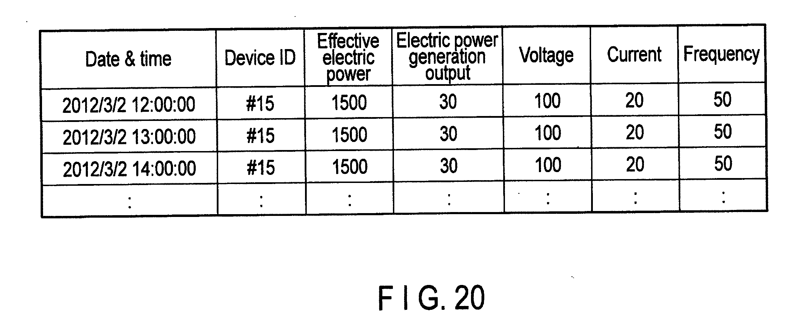

Assume that the bus connection cartridge adapter 18 has received a message from the external application unit 20 via the common bus 14 (ST24). Assume that the received message is a request message in which a service name and destination are designated in properties within the header part. This request message includes, for example, a device ID representing a data acquisition target device, and data of every hour between the start date and time and the end date and time (e.g., the values of a device ID, date and time, supply capability forecast, and maximum electric power forecast), as shown in FIG. 20.

Thereafter, the bus connection cartridge adapter 18 executes steps ST25 to ST27, as in steps ST5 to ST7 described above.

Next, an operation of modifying an element program or the file F1 used in the above-described bus connection cartridge adapter 18 will be explained.

In the monitoring apparatus, when data and a modification instruction designating an element name are input by operating an input unit (not shown) by the administrator, the bus connection cartridge adapter 18 accepts this input.

Based on the data and modification instruction, input of which has been accepted, the bus connection cartridge adapter 18 modifies an element program identified by the designated element name.

In the monitoring apparatus, when a file name for identifying the file F1, a modification instruction designating an element name, and a modification element name are input by operating the input unit (not shown) by the administrator, the bus connection cartridge adapter 18 accepts this input.

Based on the file name, modification instruction, and modification element name, input of which has been accepted, the bus connection cartridge adapter 18 modifies, into the modification element name, the element name in the file F1 designated by the file name and modification instruction. Along with the modification of the element name, the calling order of elements can also be modified.

As described above, according to the embodiment, the bus connection cartridge adapter 18 specifies element names from the file F1 based on a service name in a received request message or transmission message, and calls and executes respective element programs based on the specified element names. By this configuration, the embodiment can provide a bus connection program which can be easily managed, is versatile, and need not be created every time a function is changed.

For example, the bus connection cartridge adapter 18 common to respective messages is usable. When a function is added or changed, the main body of the bus connection cartridge adapter 18 need not be changed. When various requirements such as a security requirement are changed, the change can be coped with merely by modifying elements. Therefore, the bus connection program which causes the monitoring apparatus 10 to function as the bus connection cartridge adapter 18 can be easily managed, is versatile, and need not be created every time a function is changed.

Supplementarily, the requirements of the respective items of functions such as security, standardization support, and individual request support change for each country, case, and region in an electric power system. Considering this, the program of each function is provided as an element so that the element program can be internally called. This configuration can easily deal with a combination of a plurality of functions, and enables quick system construction, function change, and the like.

In the electric power system, a plurality of functions such as security, standardization support, and individual request support need to be simultaneously implemented. To achieve this, respective elements can be successively called based on the calling order of elements. This configuration can simultaneously implement a plurality of functions.

When element names and a calling order are designated in the file F1 of the XML format, changes of the element names and calling order can be easily coped with.

In the electric power system, various requirements are frequently changed. The configuration in which various elements are internally called can quickly cope with such a change by merely modifying an element, without changing the bus connection cartridge adapter 18.

When an element name and calling order are changed, the change can be easily coped with by modifying the external file F1.

The configuration in which each element and the bus connection cartridge adapter 18 are separated facilitates application management because the bus connection cartridge adapter 18 and each element can be separately managed

### <Second Embodiment>

An outline of the second embodiment will be explained.

In an electric power system, functions such as security, standardization support, and individual request support change for each application. Considering this, in the first embodiment, each function is implemented by elements so that it can be internally called.

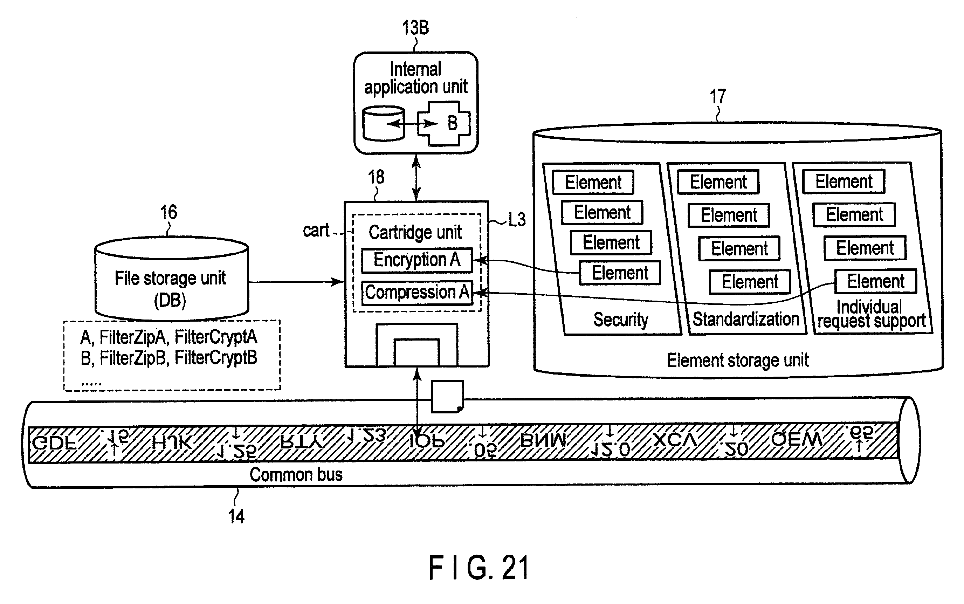

To the contrary, in the second embodiment, element names necessary for each application, and the calling order of elements are saved in a DB (database), as shown in FIG. 21.

This enables the following:
By the configuration in which element names and a calling order are held in the DB, accesses from various applications become possible. Also, an element name or calling order can be easily changed because it is only necessary to modify the DB at one portion.

An outline of the second embodiment has been given. Subsequently, the second embodiment will be explained in detail.

The second embodiment is a modification of the first embodiment. A file F1 is described in the table format, and a file storage unit 16 is a database capable of searching for element names by using a service name as a key. Note that the file storage unit 16 may be a database capable of searching for element names and a calling order by using a service name as a key.

By the above-described configuration, necessary element names can be searched for, and an element calling order can be designated by using a database, in addition to the effects of the first embodiment.

Supplementarily, new functions, such as a standardization requirement, always need to be incorporated in an electric power system. Also, the requirement of a combination of functions is sometimes changed. Therefore, by the configuration in which the element names of respective elements and a calling order are saved in the DB, accesses from various applications become possible. An element name or calling order can be changed at only one portion.

### <Third Embodiment>

An outline of the third embodiment will be explained.

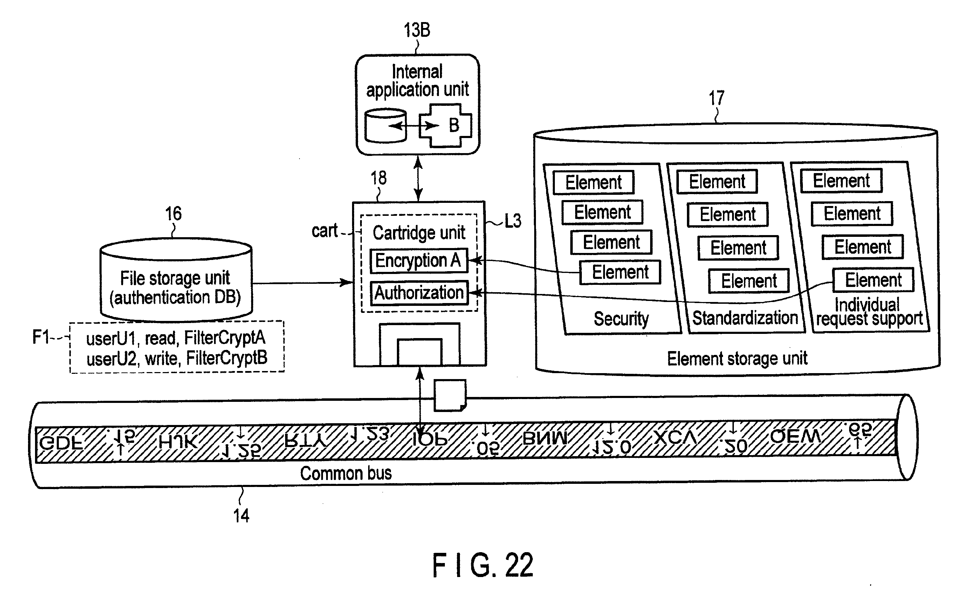

In the third embodiment, element names necessary for each application, and an element calling order are saved in a DB, and information necessary for authentication processing is also saved in the DB, as shown in FIG. 22. Based on the user authentication result, authority such as the read authority or write authority is given, and necessary elements are acquired. For example, for user U1, a read authorization A element is executed, and then an encryption A element is executed.

This enables the following:
By the configuration in which information necessary for authentication is saved in the DB, authority such as the read authority can be given for each user, and elements necessary for each authority can be defined. By the configuration in which various kinds of information are held in the DB, as in the second embodiment, accesses from various applications become possible. Also, information necessary for authentication, an element name, or a calling order can be easily changed because it is only necessary to modify the DB at one portion.

An outline of the third embodiment has been given. Subsequently, the third embodiment will be explained in detail.

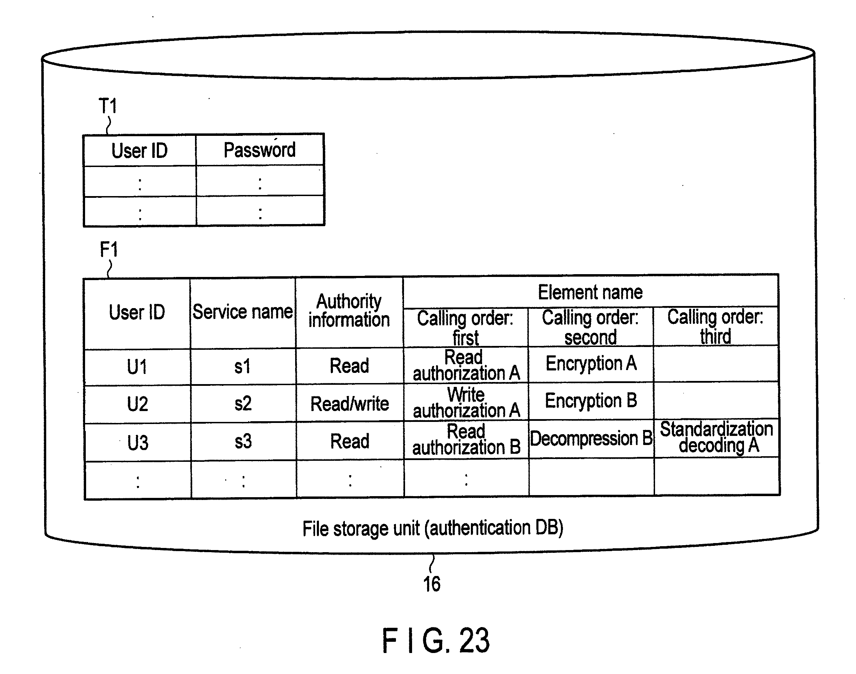

The third embodiment is a modification of the first embodiment. A file storage unit 16 stores an authentication table T1 and file F1, as shown in FIGS. 22 and 23.

The authentication table T1 is information which describes, in association with each other, a user ID for identifying a user who operates an external application unit 20, and a password for authenticating the user.

The file F1 describes, in association with each other, a user ID, a service name, an element name, and authority information representing the authority of the user.

The file storage unit 16 stores the authentication table T1 for authentication and authority information, and thus may also be called an authentication DB.

Respective element programs in an element storage unit 17 further include the seventh element program for executing processing of searching for the file F1 based on a service name in a request message successful in authentication using a password, and processing the request message so as to include authority information obtained by the search.

In association with authentication, a bus connection cartridge adapter 18 further includes the following functions (f18-13) to (f18-15):
(f18-13) An authentication function of, when a request message including a user ID, password, and service name is received by the first reception function (f18-1), authenticating the validity of the request message by collating the user ID and password in the received request message with a user ID and password in the authentication table T1.
(f18-14) A permission function of, when authentication succeeds, permitting execution of the first specifying function, first processing function, and sending function.
(f18-15) An inhibition function of, when authentication fails, inhibiting execution of the first specifying function (f18-2), first processing function (f18-3), and sending function (f18-4).

Next, the operation of a monitoring apparatus including the bus connection cartridge adapter 18 having the above-described arrangement will be explained. In this operation, after receiving a message from the external application unit 20 in step ST4, ST12, or ST24 described above, user authentication is executed. If the authentication succeeds, the process shifts to step ST5, ST13, or ST25. Since steps ST4, ST12, and ST24 are parts of the same processing, step ST4 will be described as a representative example.

More specifically, assume that the bus connection cartridge adapter 18 has received a message from the external application unit 20 via a common bus 14 in step ST4 described above. Assume that the received message is a request message in which a user ID, password, and service name are designated in properties within the header part.

The bus connection cartridge adapter 18 authenticates the validity of the request message by collating the user ID and password in the received request message with a user ID and password in the authentication table T1.

If the authentication fails, the bus connection cartridge adapter 18 ends the processing in order to inhibit execution of the first specifying function, first processing function, and sending function.

If the authentication succeeds, the bus connection cartridge adapter 18 permits execution of the first specifying function, first processing function, and sending function, and executes processes in step ST5 and subsequent steps described above.

As described above, according to the embodiment, user authentication and authorization can be executed, in addition to the effects of the first embodiment.

Supplementarily, security processing based on the access right or the like is necessary for each user in an electric power system. By performing user authentication using the authentication DB, necessary elements including authorization, and an element calling order can be acquired for each user.

### <Fourth Embodiment>

An outline of the fourth embodiment will be given.

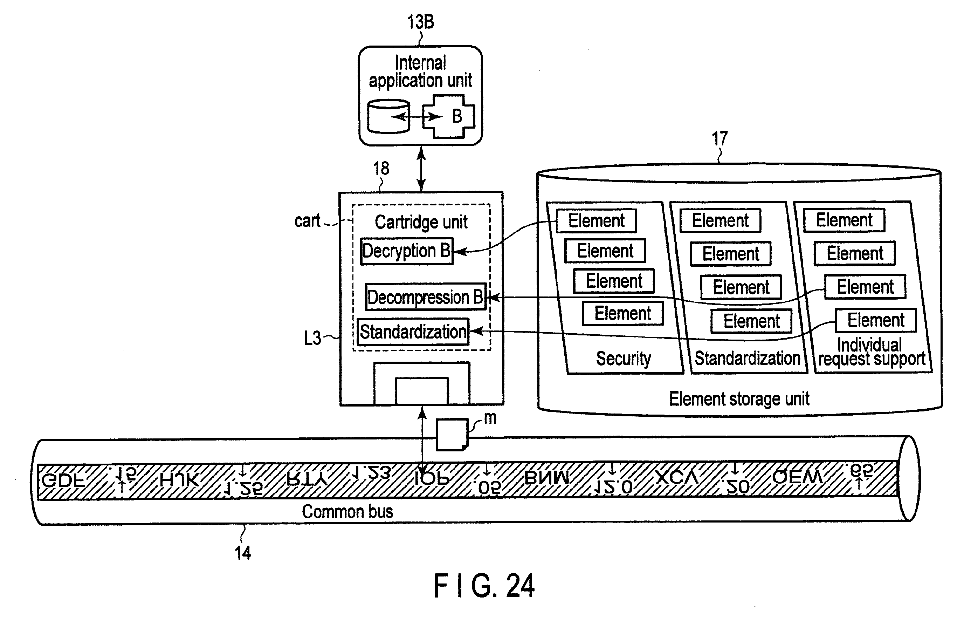

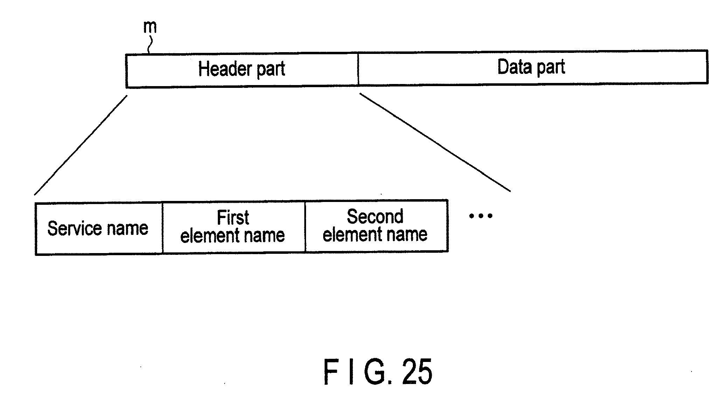

In the fourth embodiment, element names necessary for each application and an element calling order are saved in the header part (message properties) of a message m, as shown in FIGS. 24 and 25. Assume that the message properties include a service name, element names, and a calling order. Upon receiving this message, a bus connection cartridge adapter 18 calls and executes respective elements based on a calling order, and element names for returning a message to an original state based on element names in the message properties. For example, when element names in the message properties are "standardization IEC", "encryption B", and "compression B", the bus connection cartridge adapter 18 calls and executes "decompression B", "decryption B", and "standardization IEC61970 support".

This enables the following:
Even if no element information is held in advance in the configuration in which element names and a calling order are held in the message properties, necessary elements can be dynamically determined in accordance with the contents of the message.

An outline of the fourth embodiment has been given above. Subsequently, the fourth embodiment will be explained in detail.

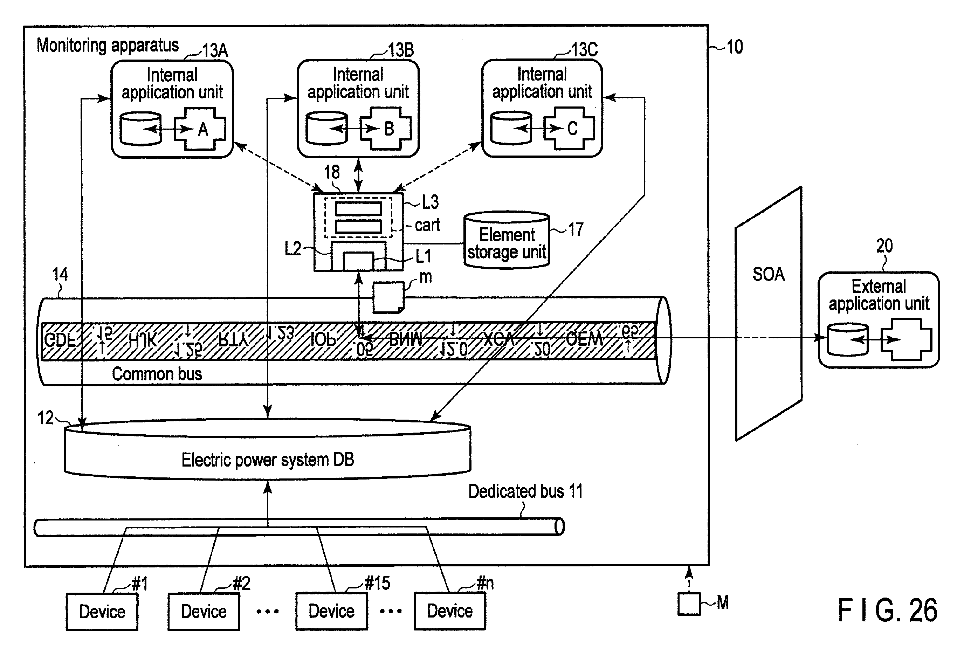

FIG. 26 is a schematic view showing a monitoring apparatus to which a bus connection program according to the fourth embodiment is applied, and the peripheral arrangement of the monitoring apparatus.

The fourth embodiment is a modification of the first or second embodiment. The file storage unit 16 which stores a file F1 representing element names, a calling order, and the like is omitted, unlike the arrangement shown in FIG. 10.

Along with this, the bus connection cartridge adapter 18 operates to call and execute respective elements without searching for the file F1.

More specifically, the bus connection cartridge adapter 18 includes the following functions (f18-1)' to (f18-8)', instead of the above-mentioned functions (f18-1) to (f18-8):
(f18-1)' A first reception function of receiving, from an external application unit 20 via a common bus 14, a request message which designates a service name and destination for identifying an internal application unit 13B, element names for identifying element programs, and the calling order of the element programs.
(f18-2)' A first specifying function of extracting element names and a calling order from the received request message, and specifying element names and a calling order in a relationship opposite to the extracted element names and calling order. This extraction can be executed based on, for example, the format of the request message. This specification can be executed by, for example, defining an opposite relationship in the bus connection program. The opposite relationship is a relationship of restoring a message to an original state. For example, element names "standardization element", "encryption element", and "compression element", and element names "standardization decoding element", "decryption element", and "decompression element" have opposite relationships. For example, the first calling turn and the final calling turn have an opposite relationship. Similarly, the second calling turn from the beginning and the second calling turn from the last have an opposite relationship. This also applies to the second specifying function (f18-6)'.
(f18-3)' A first processing function of processing the request message by calling and executing respective element programs based on the specified element names and calling order.
(f18-4)' A sending function of extracting data from the request message processed by the first processing function (f18-3)', and sending the data to the internal application unit 13B corresponding to the service name or destination designated by the request message.
(f18-5)' A second reception function of receiving, from the internal application unit 13B, a transmission message which designates a service name for identifying the internal application unit 13B, a destination for identifying the external application unit 20, element names for identifying element programs, and the calling order of the element programs.
(f18-6)' A second specifying function of extracting element names and a calling order from the received transmission message, and specifying element names and a calling order in a relationship opposite to the extracted element names and calling order.
(f18-7)' A second processing function of processing the transmission message by calling and executing respective element programs based on the specified element names and calling order.
(f18-8)' A transmission function of transmitting the transmission message processed by the second processing function (f18-7)' to the external application unit 20 corresponding to the service name or destination designated by the transmission message.

The aforementioned functions (f18-11) and (f18-12) for modifying a file are omitted in the bus connection cartridge adapter 18.

Note that the remaining arrangement in a monitoring apparatus 10 is the same as that in the first embodiment. For example, element programs in an element storage unit 17 are the same as those in the first embodiment.

According to the above-described configuration, the bus connection cartridge adapter 18 receives a message including element names and a calling order, and specifies the element names and calling order from the message in steps ST5, ST9, ST13, ST21, and ST25 described above without using the file F1. In addition to the effects of the first or second embodiment, respective element programs can be called and executed without the file F1.

Supplementarily, necessary elements and an element calling order can be selected in accordance with the contents of the message properties in the embodiment. More specifically, elements used for processing are saved in the message properties. By referring to the properties, the message can be returned to an original state on a side on which the processed message has been received.

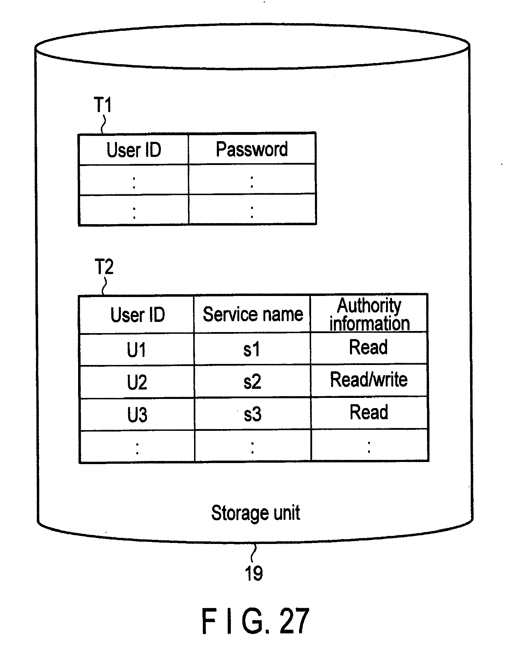

Note that the embodiment may be modified into a configuration in which the bus connection cartridge adapter 18 executes user authentication and authorization, as in the third embodiment, by using a message which further includes a user ID and password in addition to a service name, a destination, element names, and a calling order, and a storage unit 19 which stores the authentication table T1 and an authority table T2, as shown in FIG. 27. In this case, the file F1 in the third embodiment is replaced with the authority table T2. The authority table T2 is configured by omitting element names and a calling order from the file F1 in the third embodiment. The authority table T2 describes a user ID, service name, and authority information in association with each other.

### <Fifth Embodiment>

An outline of the fifth embodiment will be explained.

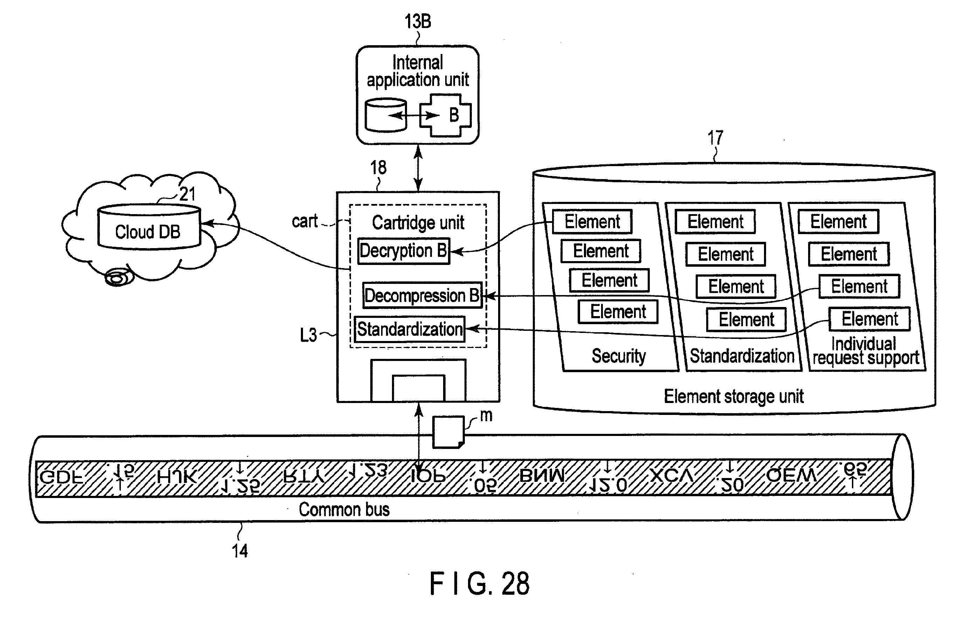

In the fifth embodiment, after executing each element, a bus connection cartridge adapter 18 writes the result in a cloud DB 21, as shown in FIG. 28. For example, the bus connection cartridge adapter 18 executes an encryption A element and compression element A, and then writes a message including the execution results in the cloud DB.

This enables the following:
The results can be confirmed from a plurality of external application units 20.

Access control to data in the cloud DB by an authentication system can be implemented.

Security can be enhanced by write processing in the cloud DB.

An outline of the fifth embodiment has been given. Subsequently, the fifth embodiment will be explained in detail.

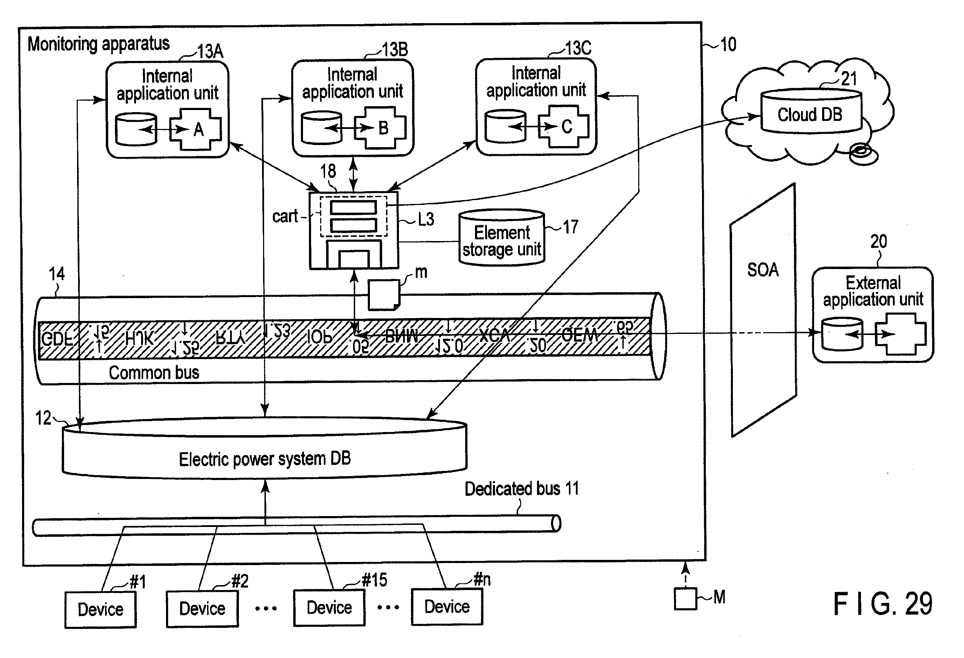

FIG. 29 is a schematic view showing a monitoring apparatus to which a bus connection program according to the fifth embodiment is applied, and the peripheral arrangement of the monitoring apparatus.

This embodiment is a modification of the fourth embodiment. The bus connection cartridge adapter 18 can transmit a transmission message to the external cloud DB 21.

More specifically, the transmission function (f18-8)' of the bus connection cartridge adapter 18 includes the following functions (f18-8-1) to (f18-8-3):
(f18-8-1) A determination function of determining whether a transmission message processed by the second processing function (f18-7) includes a result requested by a request message.
(f18-8-2) A first transmission function of, when it is determined that the transmission message includes the requested result, transmitting the transmission message to the predetermined cloud DB (external cloud storage unit) 21. Note that the first transmission function can also transmit a transmission result notification such as "Success" or "error" to the external application unit 20 after transmission to the cloud DB 21.
(f18-8-3) A second transmission function of, when it is determined that the transmission message does not include the requested result, transmitting the transmission message to the external application unit 20.

Next, the operation of processing by the bus connection cartridge adapter 18 having the above-described arrangement will be explained. This operation is a modification of steps ST11 and ST23 described above. Since steps ST11 and ST23 are the same processing, step ST11 will be described as a representative example.

More specifically, in step ST11 described above, the bus connection cartridge adapter 18 determines whether a transmission message processed in step ST10 includes a result requested by a request message.

If the bus connection cartridge adapter 18 determines that the transmission message includes the requested result, it transmits the transmission message to the predetermined cloud DB (external cloud storage unit) 21.

If the bus connection cartridge adapter 18 determines that the transmission message does not include the requested result, it transmits the transmission message to the external application unit 20. Then, step ST11 ends.

As described above, according to the embodiment, the bus connection cartridge adapter 18 transmits a result to the cloud DB 21 without sending back a requested result to the external application unit 20. By this configuration, the external application unit 20 can access the authentication system of the cloud DB 21 and confirm the result, in addition to the operation effects of the fourth embodiment.

Supplementarily, the the cloud DB 21 serving as a processing result write destination is set in advance in the bus connection cartridge adapter 18. By this configuration, data in the cloud DB 21 are updated based on the results of executing a plurality of elements. Therefore, accesses from various external application units 20 become possible, and the load of message processing (e.g., encryption) when sending back data can be reduced. After the external application units 20 are authenticated by the authentication system of the predetermined cloud DB 21, they can confirm results written in the cloud DB 21.

The embodiment can implement access control to data in the cloud DB 21 by the authentication system. Further, the embodiment can enhance security by writing in the cloud DB 21.

The embodiment is applicable not only to the fourth embodiment, but also to each of the first to third embodiments.

According to at least one of the above-described embodiments, the bus connection cartridge adapter 18 specifies element names from the file F1 based on a service name in a received request message or transmission message, and calls and executes respective element programs based on the specified element names. By this configuration, the embodiment can provide a bus connection program which can be easily managed, is versatile, and need not be created every time a function is changed.

The method described in each embodiment can also be stored in a storage medium such as a magnetic disk (floppy^{™} disk, hard disk, or the like), an optical disk (CD-ROM, DVD, or the like), a magneto-optical disk (MO), or a semiconductor memory as a program which can be executed by a computer and distributed.

As the storage medium, any configuration which is a computer-readable storage medium in which a program can be stored may be used regardless of a storage format.

An OS (operating system) which operates on a computer on the basis of an instruction of a program installed from the storage medium in the computer, database management software, and MW (middleware) such as network software may execute a part of the processes to realize the embodiment.

Furthermore, the storage medium according to each embodiment includes not only a medium independent of a computer but also a storage medium in which a program transmitted through a LAN, the Internet, or the like is downloaded and stored or temporarily stored.

The number of storage media is not limited to one. A case in which the process in each embodiment is executed from a plurality of media is included in the storage medium according to the present invention. Any medium configuration may be used.

A computer according to each embodiment is to execute the processes in each embodiment on the basis of the program stored in a storage medium. The computer may have any configuration such as one apparatus constituted by a personal computer or a system in which a plurality of apparatuses are connected by a network.

A computer in each embodiment includes not only a personal computer but also an arithmetic processing apparatus, a microcomputer, or the like included in an information processing apparatus. The computer is a generic name of an apparatus and a device which can realize the functions of the present invention by a program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A bus connection program which is stored in a non-transitory computer-readable storage medium, and which is used in a monitoring apparatus including a data storage unit configured to store data received from a plurality of devices, an internal application unit configured to be able to transmit/receive a message including the data in the data storage unit, and a common bus configured to be able to transmit the message between the internal application unit and an external application unit, the monitoring apparatus executing the bus connection program,
wherein the monitoring apparatus further includes:
a file storage unit configured to store a file which describes, in association with each other, a service name for identifying the internal application unit, and element names for identifying element programs used to execute respective processes on the message; and
an element storage unit configured to store a plurality of element programs which are individually called and executed in accordance with designation of the element names,
the plurality of element programs are a plurality of programs for processing a message to be transmitted/received via the common bus, and include:
a standardization function element program for processing the message based on a standard;
an individual request support function element program for processing the message based on an individual request; and
a security function support element program for processing the message based on security support,
the bus connection program causes the monitoring apparatus to further function as a bus connection unit configured to connect the internal application unit and the common bus, and
the bus connection unit includes:
a first reception unit configured to receive, from the external application unit via the common bus, a request message which designates the service name and a destination;
a first specifying unit configured to specify element names from the file based on the service name in the received request message;
a first processing unit configured to process the request message by calling and executing the respective element programs based on the specified element names;
a sending unit configured to extract data from the request message processed by the first processing unit, and to send the data to an internal application unit corresponding to one of the service name and destination designated by the request message;
a second reception unit configured to receive, from the internal application unit, a transmission message which designates the service name and a destination;
a second specifying unit configured to specify element names from the file based on the service name in the received transmission message;
a second processing unit configured to process the transmission message by calling and executing the respective element programs based on the element names specified by the second specifying unit; and
a transmission unit configured to transmit the transmission message processed by the second processing unit to the external application unit corresponding to one of the service name and destination designated by the transmission message.

2. The bus connection program according to claim 1, wherein
the file describes, in association with each other, the service name, the element names for identifying the element programs, and a calling order of the element programs,
the first specifying unit and the second specifying unit are configured to specify element names and a calling order from the file based on the service name, and
the first processing unit and the second processing unit are configured to process the request message by successively calling and executing the element programs based on the specified element names and calling order.

3. The bus connection program according to claim 1, wherein the file is described in an XML format.

4. The bus connection program according to claim 1, wherein
the file is described in a table format, and
the file storage unit is a database configured to be able to search for the element names by using the service name as a key.

5. The bus connection program according to claim 1, wherein
the monitoring apparatus further includes a password storage unit configured to store, in association with each other, a user ID for identifying a user who operates the external application unit, and a password for authenticating the user,
the file describes, in association with each other, the user ID, the service name, the element names, and authority information representing authority of the user,
the respective element programs further include a seventh element program for executing processing of searching for the file based on a service name in a request message successful in authentication using the password, and processing the request message so as to include authority information obtained by the search, and
the bus connection unit further includes:
an authentication unit configured to, when the first reception unit receives a request message including the user ID, the password, and the service name, authenticate validity of the request message by collating the user ID and the password in the received request message with a user ID and a password in the password storage unit;
a permission unit configured to, when the authentication succeeds, permit execution of the first specifying unit, the first processing unit, and the sending unit; and
an inhibition unit configured to, when the authentication fails, inhibit execution of the first specifying unit, the first processing unit, and the sending unit.

6. The bus connection program according to claim 1, wherein the bus connection unit further includes:
a second acceptance unit configured to accept input of a file name for identifying the file, a modification instruction designating the element name, and a modification element name; and
a second modification unit configured to modify, to the modification element name, the element name in the file designated by the file name and the modification instruction, based on the file name, modification instruction, and modification element name, input of which has been accepted by the second acceptance unit.

7. A bus connection program which is stored in a non-transitory computer-readable storage medium, and which is used in a monitoring apparatus including a data storage unit configured to store data received from a plurality of devices, an internal application unit configured to be able to transmit/receive a message including the data in the data storage unit, and a common bus configured to be able to transmit the message between the internal application unit and an external application unit, the monitoring apparatus executing the bus connection program, wherein
the monitoring apparatus further includes an element storage unit configured to store a plurality of element programs which are individually called and executed in accordance with designation of element names for identifying element programs used to execute respective processes on the message,
the plurality of element programs are a plurality of programs for processing a message to be transmitted/received via the common bus, and include:
a standardization function element program for processing the message based on a standard;
an individual request support function element program for processing the message based on an individual request; and
a security function support element program for processing the message based on security support,
the bus connection program causes the monitoring apparatus to further function as bus a connection unit configured to connect the internal application unit and the common bus, and
the bus connection unit includes:
a first reception unit configured to receive, from the external application unit via the common bus, a request message which designates a service name and destination for identifying the internal application unit, the element names for identifying the element programs, and a calling order of the element programs;
a first specifying unit configured to extract element names and a calling order in the received request message, and to specify element names and a calling order in a relationship opposite to the extracted element names and calling order;
a first processing unit configured to process the request message by calling and executing the respective element programs based on the specified element names and calling order;
a sending unit configured to extract data from the request message processed by the first processing unit, and to send the data to the internal application unit corresponding to one of the service name and destination designated by the request message;
a second reception unit configured to receive, from the internal application unit, a transmission message which designates a service name for identifying the internal application unit, a destination for identifying the external application unit, the element names for identifying the element programs, and the calling order of the element programs;
a second specifying unit configured to extract the element names and the calling order in the received transmission message, and to specify element names and a calling order in a relationship opposite to the extracted element names and calling order;
a second processing unit configured to process the transmission message by calling and executing the respective element programs based on the specified element names and calling order; and
a transmission unit configured to transmit the transmission message processed by the second processing unit to the external application unit corresponding to one of the service name and destination designated by the transmission message.

8. The bus connection program according to claim 7, wherein the bus connection unit further includes:
a first acceptance unit configured to accept input of data, and a modification instruction designating the element name; and
a first modification unit configured to modify an element program identified by the designated element name based on the data and modification instruction, input of which has been accepted by the first acceptance unit.

9. The bus connection program according to claim 7, wherein
the transmission unit includes:
a determination unit configured to determine whether the transmission message processed by the second processing unit includes a result requested by the request message;
a first transmission unit configured to, when the transmission message is determined to include the requested result, transmit the transmission message to predetermined external cloud storage unit; and
a second transmission unit configured to, when the transmission message is determined not to include the requested result, transmit the transmission message to the external application unit.

10. A bus connection apparatus used in a monitoring apparatus including a data storage unit configured to store data received from a plurality of devices, an internal application unit configured to be able to transmit/receive a message including the data in the data storage unit, and a common bus configured to be able to transmit the message between the internal application unit and an external application unit, the bus connection apparatus including bus connection unit configured to connect the internal application unit and the common bus,
wherein the monitoring apparatus further includes:
a file storage unit configured to store a file which describes, in association with each other, a service name for identifying the internal application unit, and element names for identifying element programs used to execute respective processes on the message; and
an element storage unit configured to store a plurality of element programs which are individually called and executed in accordance with designation of the element names,
the plurality of element programs are a plurality of programs for processing a message to be transmitted/received via the common bus, and include:
a standardization function element program for processing the message based on a standard;
an individual request support function element program for processing the message based on an individual request; and
a security function support element program for processing the message based on security support, and
the bus connection unit includes:
a first reception unit configured to receive, from the external application unit via the common bus, a request message which designates the service name and a destination;
a first specifying unit configured to specify element names from the file based on the service name in the received request message;
a first processing unit configured to process the request message by calling and executing the respective element programs based on the specified element names;
a sending unit configured to extract data from the request message processed by the first processing unit, and to send the data to an internal application unit corresponding to one of the service name and destination designated by the request message;
a second reception unit configured to receive, from the internal application unit, a transmission message which designates the service name and a destination;
a second specifying unit configured to specify element names from the file based on the service name in the received transmission message;
a second processing unit configured to process the transmission message by calling and executing the respective element programs based on the element names specified by the second specifying unit; and
a transmission unit configured to transmit the transmission message processed by the second processing unit to the external application unit corresponding to one of the service name and destination designated by the transmission message.
